# EUROPEAN PATENT SPECIFICATION

(11) **EP 1 733 812 B1**
(45) Date of publication and mention of the grant of the patent: **08.04.2009**
(21) Application number: 06445032.3
(22) Date of filing: 30.05.2006
(51) Int. Cl.: B21B 27/03

(54) **A roll**
Walze
Rouleau

(30) Priority: 17.06.2005 SE 0501385
(43) Date of publication of application: 20.12.2006
(73) Proprietor: Sandvik Intellectual Property AB, 811 81 Sandviken (SE)
(72) Inventor: Kayhan, Menderez, 147 50 Tumba (SE); Ankaragren, Jimmy, 120 58 Ärsta (SE)
(74) Representative: Taquist, Henrik Lennart Emanuel

(56) References cited:
- EP-A- 0 343 440
- DE-A1- 2 528 157
- US-A- 5 483 812
- US-A- 5 735 788

## Description

### Technical Field of the Invention

This invention relates to a combi roll comprising a roll shaft and a roll ring mounted on the same against which at least one other ring is axially pressed, end contact surfaces of the rings pressed against each other serving as torque-transferring friction joints.

### Background of the Invention

Generally, combi rolls include two or more roll rings, which are kept separated by intermediate spacer rings, the entire set of rings being kept fixed on the roll shaft by way of, on one hand, a fixed stop ring, e.g., a shoulder of the roll shaft and, on the other hand, a lock nut, which via an internal thread may be tightened on a male thread of the shaft. Furthermore, between the lock nut and the set of roll rings and spacer rings, respectively, springs as well as additional rings may be present.

In many cases, the roll rings are manufactured from a hard material, such as cemented carbide, while intermediate spacer rings are manufactured of a softer or more ductile material, preferably steel or cast iron. Considerable torque should be transmitted from the roll shaft to the roll rings. When the roll rings exclusively are made of cemented carbide, the transmission of torque usually takes place by an axial (cylindrical) train of forces from the lock nut to the fixed stop ring via the end contact surfaces between the individual rings. More precisely, the torque is transmitted from the individual ring to an adjacent ring by friction action in those interfaces where an end surface of a ring is pressed against a co-operating end surface of the adjacent ring. In order to manage this purpose throughout the train of forces, the individual interfaces or friction joints between the rings have to be powerful, i.e., be able to transmit torque without the rings slipping in relation to each other.

### Prior Art

In previously known combi rolls (see, for instance, US-A-5735788 and US-A-6685611), the end surfaces of the individual interfaces are metallic in so far as the surfaces have been generated by machining, such as turning and/or grinding, of a metal blank that should form the individual ring. In other words, the end surfaces of a spacer ring of steel are steel surfaces, while the end surfaces of cemented carbide roll ring are a cemented carbide surfaces. Dependent on the surface finish and the nature of the different materials, the friction between such surfaces may become inferior, something that may lead to the rings slipping in relation to each other. Another shortcoming of previously known combi rolls is that the roll rings as well as the spacer rings are formed with end surfaces that extend radially all the way from the inside of the ring to the outside thereof, i.e., from the envelope surface of the roll shaft to the external cylinder surface of the individual ring. This design of the end surfaces results in transmission of torque in a zone situated approximately halfway between the inside and the outside of the spacer ring, i.e., relatively near the envelope surface of the roll shaft. Furthermore, the surface pressure in the interfaces between the end contact surfaces will be fairly low because the contact surfaces are comparatively large.

### Objects and Features of the Invention

The present invention aims at obviating the above-mentioned disadvantages of previously known combi rolls and at providing an improved roll. Therefore, a primary object of the invention is to provide a combi roll in which large torque may be transmitted between adjacent rings via friction joints that in a reliable way counteract slipping between the rings. In other words, the invention aims at providing powerful and efficient friction joints between the rings of the roll. It is also an object to provide the improved friction joints by simple elements.

According to the invention, at least the primary object is attained by way of the features defined in the characterizing clause of the independent claim 1. Preferred embodiments of the roll according to the invention are further defined in the dependent claims.

### Brief Description of the Appended Drawing

In the drawing:
- Fig. 1: is a partly cut longitudinal view through a combi roll according to the invention,
- Fig. 2: is a perspective view of a spacer ring included in the roll,
- Fig. 3: is an enlarged detailed section showing a spacer ring separated from two roll rings before being urged against these, and
- Fig. 4: is an extremely enlarged section showing a part of the interface between the contact surfaces of the rings.

### Detailed Description of a Preferred Embodiment of the Invention

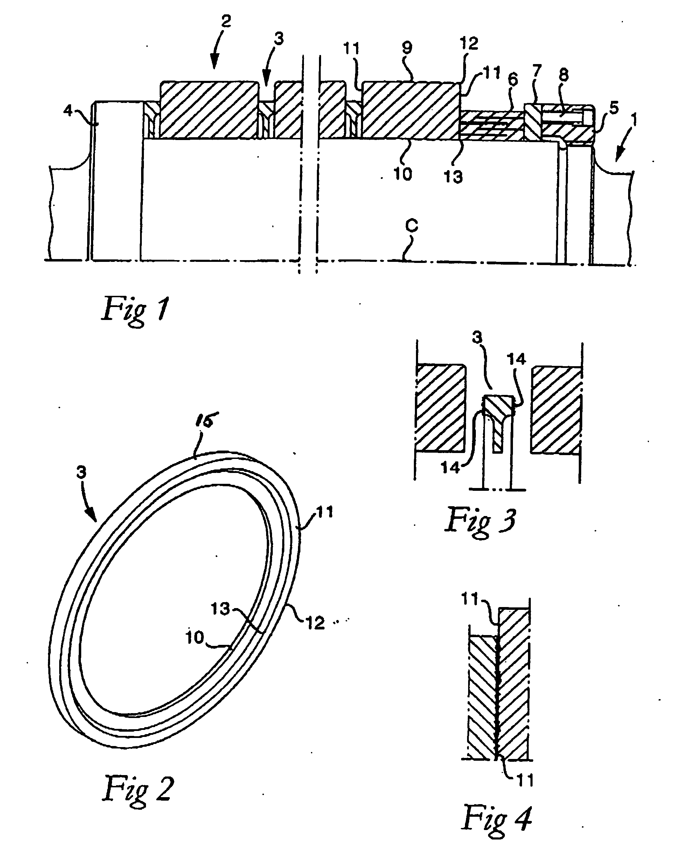

In Fig. 1, a roll is shown that includes a drivable roll shaft 1, a number of roll rings 2, and a number of spacer rings 3. The roll shaft 1 has a rotationally symmetrical basic shape defined by a centre axis C.

The set of rings 2, 3 is kept in place between a fixed stop ring 4, which in the example is in the form of a ring-shaped shoulder, and a lock nut 5 at the opposite end of the shaft. The lock nut 5 has an internal thread (not shown), which may be tightened on an external thread of the roll shaft. Between the lock nut 5 and the first roll ring 2, there is in this case also a dynamic spring 6, which is separated from the lock nut by a ring 7. Furthermore, in the lock nut, there are a number of peripherically spaced-apart adjusting devices 8, by way of which the spring force of the spring 6 may be adjusted.

In the example, the roll rings 2 are assumed to be composed of solid cemented carbide, while the spacer rings 3 consist of a softer metal, e.g., steel. Each individual roll ring 2 is delimited by, on one hand, external and internal cylinder surfaces 9, 10 and, on the other hand, opposite end surfaces 11, each one of which is planar and extends perpendicularly to the centre axis C. Each end surface 11 is limited outwardly by an outer, circular edge line 12, and inwardly by an inner, circular edge line 13.

In an analogous way, the individual spacer ring 3 (see Fig. 2) is delimited by an external cylinder surface 15 that determines the outer diameter of the ring, an internal cylinder surface or hole edge surface 10 that determines the inner diameter of the ring, as well as two opposite planar end surfaces 11 that are ring-shaped and extend perpendicularly to the centre axis C.

As far as the shown roll has been described hitherto, the same is in all essentials previously known (however with the exception of the design of the spacer rings 3).

According to an aspect of the present invention the individual interface between each pair of end contact surfaces 11, being pressed against each other, there is distributed a large number of small grains of a material that is harder than the hardest material of anyone of the rings. The grains are advantageously dispersed in a viscous fluid, e.g., a paste. In Fig. 3, three rings are shown spaced-apart from each other, on the end contact surfaces 11 of the spacer ring 3, a thin layer 14 of a paste being shown, which contains hard grains, and which has been applied to the surface in a suitable way, e.g., by painting. Alternatively, the hard grains may be applied using plating technique.

When the rings 2, 3, by way of the lock nut 5 and the adjusting devices 8, are pressed against each other by full force, the grains included in the paste will partially penetrate into each one of the end contact surfaces 11, such as is shown in Fig. 4. The individual grains will then serve as diminutive, mechanical bridges between the contact surfaces and in such a manner radically improve the torque-transmitting ability of the friction joint.

The grains in the interface shall have an average grain size of 10-125 µm, preferably 25-100 µm. Suitably, coarser grains are used when the contact surfaces are rough.

In the present case, when the roll rings consist of cemented carbide, the grains may advantageously be diamond, cubic boron nitride, ceramics or the like.

In accordance with a preferred embodiment of the invention, the individual spacer ring 3 (see Fig. 2) has been formed in such a way that the inner limiting edge line 13 of the individual end surface 11 is greater than the outer diameter of the roll shaft, i.e., greater than the diameter of the hole edge surface 10. In such a way, the total area of the end surface 11 for a given outer diameter is reduced, whereby the surface pressure against the end surface of an adjacent roll ring is increased. Furthermore, the force transmission zone, i.e., an imaginary circular line about halfway between the edge lines 12, 13, is moved outwardly in comparison with the corresponding force transmission zones in previously known spacer rings. In other words, the efficient torque arm increases, such as this is determined by the radial distance between the centre axis C and the force transfer zone.

## Claims

1. A roll comprising a roll shaft (1) and a roll ring (2) mounted on the same, against which ring at least one other ring (3) is axially pressed, end contact surfaces (11) of the rings being pressed against each other and serving as torque-transmitting friction joints, **characterized in that,** in the interface between the contact surfaces (11) there is distributed a large number of small grains of a material that is harder than the hardest material in anyone of the rings, the grains having the purpose of partially penetrating into each one of the contact surfaces (11).

2. Roll according to claim 1, **characterized in that** the grains are dispersed in a viscous fluid.

3. Roll according to claim 1 or 2, **characterized in that** the average grain size of the grains in the interface is 10-125 µm, preferably 25-100 µm.

4. Roll according to any one of the preceding claims, **characterized in that** the roll ring is manufactured from cemented carbide, and that the grains are a material selected from the group: diamond, cubic boron nitride or ceramics.

5. Roll according to any one of the preceding claims, **characterized in that** at least one of the end surfaces (11) of a spacer ring (3) is limited by an inner edge (13), the diameter of which is greater than the outer diameter of the roll shaft (1).

## Patentansprüche

1. Walze mit einem Walzenschaft (1) und einem daran montierten Walzenring (2), wobei wenigstens ein weiterer Ring (3) in axialer Richtung gegen den Ring gedrückt wird und Stirnkontaktflächen (11) der Ringe gegeneinander gedrückt werden und als Drehmoment übertragende Reibungsgelenke dienen, **dadurch gekennzeichnet, daß** an der Grenzfläche zwischen den Kontaktflächen (11) eine große Zahl kleiner Körner aus einem Material, welches härter ist als das härteste Material in irgendeinem der Ringe, verteilt ist und die Körner dem Zweck dienen, teilweise in jede der Kontaktflächen (11) einzudringen.

2. Walze nach Anspruch 1, **dadurch gekennzeichnet, daß** die Körner in einem viskosen Fluid dispergiert sind.

3. Walze nach Anspruch 1 oder 2, **dadurch gekennzeichnet, daß** die mittlere Korngröße der Körner an der Grenzfläche 10-125 µm, bevorzugt 25-100 µm, beträgt.

4. Walze nach einem der vorangegangenen Ansprüche, **dadurch gekennzeichnet, daß** der Walzenring aus Hartmetall hergestellt ist und die Körner aus einem Material bestehen, das aus der Gruppe ausgewählt ist, bestehend aus Diamant, kubischem Bornitrid oder Keramiken.

5. Walze nach einem der vorangegangenen Ansprüche, **dadurch gekennzeichnet, daß** wenigstens eine der Stirnflächen (11) eines Abstandsrings (3) durch eine Innenkante (13) begrenzt wird, deren Durchmesser größer ist als der Außendurchmesser des Walzenschafts (1).

## Revendications

1. Un rouleau comprenant un arbre de roulement (1) et un anneau de roulement (2) monté sur celui-ci, contre lequel anneau au moins un autre anneau (3) est axialement pressé, les surfaces terminales (11) des anneaux étant pressés contre chacune des autres et servant de joint de friction pour la transmission de couple, **caractérisé en ce que,** dans l'interface entre les surfaces de contacts (11) sont distribués un grand nombre de petits grains d'un matériau qui est plus dur que le plus dur des matériaux dans n'importe lequel des anneaux, les grains ayant pour but de pénétrer partiellement dans chacune des surfaces de contactes (11).

2. Rouleau selon la revendication 1, **caractérisé en ce que** les grains sont dispersés dans un fluide visqueux.

3. Rouleau selon la revendication 1 ou 2, **caractérisé en ce que** la taille moyenne de grain des grains dans l'interface est de 10 à 125µm, de préférence entre 25 à 100µm.

4. Rouleau selon l'une quelconque des revendications précédentes, **caractérisé en ce que** l'anneau de roulement est fabriqué à partir de carbure cémenté, et que les grains sont en un matériau choisi parmi le groupe : diamant, nitrure de bore cubique ou céramiques.

5. Rouleau selon l'une quelconque des revendications précédentes, **caractérisé en ce que** au moins une des surfaces terminales (11) d'un anneau d'entretoise (3) est limitée par un bord intérieur (13), le diamètre duquel est plus grand que le diamètre extérieur de l'arbre de roulement (1)
